# EUROPEAN PATENT APPLICATION

(11) **EP 3 546 790 A1**
(43) Date of publication of application: **02.10.2019**
(21) Application number: 19164663.7
(22) Date of filing: 22.03.2019
(51) Int. Cl.: F16F 15/32, F16F 15/34

(54) **WELDABLE COMBINED MASS COMPONENT**

(30) Priority: 29.03.2018 TR 201804447
(71) Applicant: Tirsan Kardan Sanayi Ve Ticaret Anonim Sirketi, 45030 Manisa (TR)
(72) Inventor: SEN, Onur, MANISA (TR); GEÇGIL, Ismail, MANISA (TR)
(74) Representative: Yamankaradeniz, Kemal

(57) **Abstract**

Invention relates to a combined mass component (10) consisting of counterweight plate (11) providing mass needed by combined mass component (10) to eliminate imbalance of drive shaft by providing mass balance thereon, at least a welding bridge (12) placed onto said counterweight plate (11) in order to provide connection of combined mass component (10) onto aluminium drive shaft by spot welding and at least a bridge housing (113) provided on counterweight plate (11) to provide placement of welding bridge (12) onto counterweight plate (11), and a production method for it.

## Description

### Technical Field

Invention relates to combined mass component connected onto required sections of drive shaft in order to eliminate imbalance in drive shafts by means of providing mass balance in drive shafts, a member of rotational transmission components.

Invention particularly relates to mass component consisting of weight plate providing needed mass for combined mass component, at least one welding bridge located on said mass plate to connect combined mass component onto drive shaft and at least one bridge housing formed on weight plate to provide location of welding bridge onto weight plate.

### State of the Art

Imbalance mass distribution in rotating machine components causes considerably effective centrifugal force during rotating and centrifugal forces create vibration in turn. Vibrations affect related machine component directly as well as can affect complete machine structure by passing through. This effect causes damage to machine and its components and makes them out of order. In general in order to eliminate such negative situation, mass distribution on related machine component is balanced and imbalance is eliminated.

The vibration caused by imbalance in drive shaft, which is one of rotating transmission members negatively affects other vehicle components connected to drive shaft as well as has negative effects on cabin comfort. In order to eliminate said negativities, balance weights are added to required locations on drive shaft and mass balance is provided in the related art.

The mass to be added to drive shaft to eliminate imbalance of weight should have adequate mass. In case too much mass is needed, the mass needed is provided easily from materials of high density such as steel. There is balance weight made from low density materials such as aluminium but massive balance can be provided in large volumes. For that reason, steel is preferred for balance weights.

In the related art adding balance weights onto drive shaft is provided by different methods such as gluing, the most common method is spot welding because of its practical application and cost.

When balance weight is steel and drive shaft whereon it is added is aluminium, spot welding can not be used because the parts are manufactured from different materials. As a solution, balance weight of steel material in small volumes can be used but adding a balance weight made from steel material onto drive shaft made from aluminium material by spot welding does not yield in good results.

Upon making vehicles lighter recently, use of aluminium material in drive shaft has increased considerably. In this context, adding steel balance weight to aluminium drive shaft causes a problem.

In the related art search American patent application numbered US5633093A was seen. Said application discloses a method for attaching steel counterweight to aluminium drive shaft by resistance welding by use of transition material. The transition material in said method has at least two surfaces, consisting of a steel surface and an aluminium surface and in order to prevent overheat to aluminium during welding, one or more than one outward extensions are formed on steel surface of transition material or alternatively, inner surface of counterweight of steel material instead of transition material. During fixing steel counterweight to surface where to be used, by resistance welding, electric current is transmitted through said material surface or surfaces.

As a result, due to above described negativities and deficiencies it has been necessary to make novelty and development in the related art.

### Purpose of the Invention

The present invention relates to weldable combined mass component meeting the needs mentioned above, eliminating all disadvantages and providing some additional advantages.

Main purpose of the invention is to disclose a combined mass component made from steel fixed onto aluminium drive shaft by spot welding.

Purpose of invention is to disclose a combined mass component consisting of weight plate providing needed mass for combined mass component, at least one welding bridge located on said mass plate to connect combined mass component onto aluminium drive shaft and at least one bridge housing formed on weight plate to provide location of welding bridge onto weight plate in order to eliminate imbalance of drive shaft.

Purpose of the invention is to provide the needed counterweight in minimum volume in comparison to aluminium because of making weight plate from steel, to attach combined mass component onto aluminium drive shaft by spot welding and provide good transmission of electric current and provide penetration in welding area.

Purpose of invention is to transmit electric current at spot welding through welding bridge and transmit directly to aluminium drive shaft. Welding bridge is made from material same as drive shaft unit part (aluminium). Thus one single material is used for transmission of electric current and constant-same heat and electric conductivity provides mechanical features. Thus electric current is transmitted properly, quality of welding is improved, potential welding faults are prevented considerably.

Purpose of invention is to provide mounting and fixing counterweight plate and welding bridge by means of die. Die presses and enlarge the end sections of welding bridge premounted to housing on the counterweight plate. Thus both ends of welding bridge rest on counterweight plate surface. So welding bridge is fixed to counterweight plate.

In order to achieve above mentioned purposes, the invention is a combined mass component connected onto required sections of the drive shaft in order to eliminate imbalance by providing mass balance on drive shafts and it is characterized in that it consists of
- A counterweight plate providing mass needed for combined mass component
- At least a welding bridge located on said counterweight plate in order to provide connection of combined mass component onto drive shaft by spot welding,
- At least one bridge housing formed on counterweight plate in order to provide location of welding bridge onto counterweight plate.

In order to achieve above mentioned purposes, the invention is method for production of a combined mass component connected onto required sections of the drive shaft in order to eliminate imbalance by providing mass balance on drive shafts and it is characterized in that it consists of process steps of
- Placement of welding bridges onto counterweight plate by means of bridge housing,
- Placement of counterweight plate whereon welding bridges are located, between lower die part and upper die part and compressing by die,
- Changing lower end sections and upper end sections of welding bridges permanently and transformation into lower end sections and upper end sections upon collection of counterweight plate upper surface and lower surface,
- Removal of obtained combined mass component between lower die part and upper die part.

The structural and characteristics features of the invention and all advantages will be understood better in detailed descriptions below, and therefore, the assessment should be made taking into account the said detailed explanations.

### Brief Description of the Drawings

**Figure -1:** is cross-sectional view of counterweight plate.
**Figure -2:** is cross-sectional view of welding bridge.
**Figure -3:** is cross-sectional view of process of pre-mounting of welding bridge onto counterweight plate.
**Figure -4:** is cross-sectional view of placement of counterweight part with completed pre-mounting operation between lower die part and upper die part.
**Figure -5:** is cross-sectional view of combined mass component taking shape of lower die part and upper die part.
**Figure -6:** is cross-sectional view of combined mass component removed from lower die part and upper die part.

The drawings are not necessarily to be scaled and the details not necessary for understanding the present invention might have been neglected. In addition, the components which are equivalent to great extent at least or have equivalent functions at least have been assigned the same number.

### Description of Part References

**10.** Combined mass component
**11.** Counterweight plate
**111.** Upper surface
**112.** Lower-surface
**113.** Bridge housing
**12.** Welding bridge
**121.** Lower end section
**122.** Upper end section
**123.** Stacked lower end section
**124.** Stacked lower end section
**A.** Lower die part
B. Upper die part
K. Die

### Detailed Description of the Invention

In this detailed description combined mass component (10) connected onto drive shaft aluminium part by spot welding method has been described in a manner not forming any restrictive effect and only for purpose of better understanding of the matter.

Mainly combined mass component (10) consists of counterweight plate (11) providing mass needed by combined mass component (10) to eliminate imbalance of drive shaft, at least a welding bridge (12) placed onto said counterweight plate (11) in order to provide connection of combined mass component (10) onto aluminium drive shaft by spot welding and at least a bridge housing (113) provided on counterweight plate (11) to provide placement of welding bridge (12) onto counterweight plate (11).

Figure -1 is a cross-sectional view of the counterweight plate (11). Number of bridge housings (113) provided on counterweight plate (11) to house welding bridges (12) can be one or more than one as needed. Counterweight plate (11) is made from steel and consists of one layer. Counterweight plate (11) can also be manufactured from any material that can provide adequate mass for combined mass component (10).

Welding bridge (12) is made from materials allowing welding onto surface of combined mass component (10) where it will be welded and enables fixing combined mass component (10) onto area requiring balance weight. Figure -2 is a cross-sectional view of the welding bridge (12).

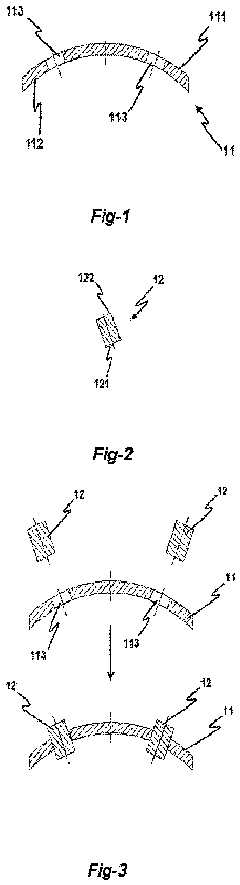

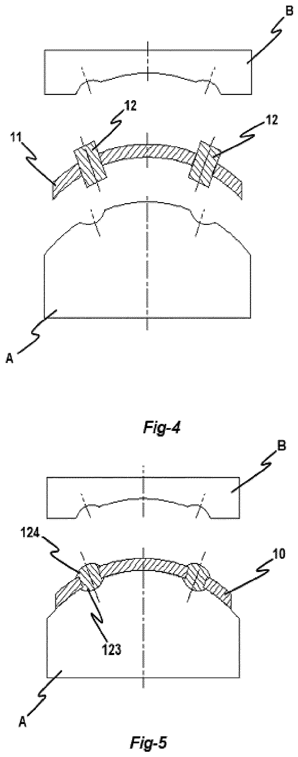

Method for production of combined mass component (10) connected onto required sections of drive shaft by spot welding in order to eliminate imbalance by providing mass balance on drive shaft is as follows:
In first stage, pre-mounting operation is completed by means of placement of welding bridges (12) onto counterweight plate (11) by bridge housings (113). Figure 3 shows cross-section view of pre-mounting operation showing mounting of welding bridges (12) onto counterweight plate (11). Then counterweight plate (11) whereon welding bridges (12) are located, is placed between lower die part (A) and upper die part (B) and is compressed by die (K). Figure 4 shows cross-sectional view of placement of counterweight part (11) with completed pre-mounting operation between lower die part (A) and upper die part (B).

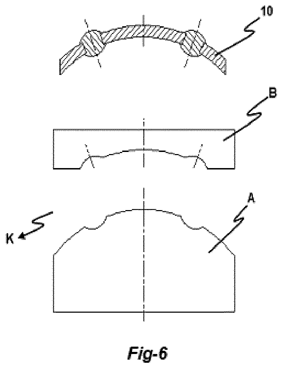

Lower end sections (121) of welding bridges (12) and upper end sections (122) compressed between lower die part (A) and upper die part (B) change shape and stack on upper surface (111) and lower surface (112) of counterweight plate (11) and transform into stacked lower end sections (123) and stacked upper end sections (124). Thus counterweight plate (11) and welding bridges (12) inter-combine in a manner not separated and form combined mass component (10). In last stage, the obtained combined mass component (10) is removed from lower die part (A) and upper die part (B). Figure 5 shows cross-sectional view of combined mass component (10) taking shape of lower die part (A) and upper die part (B) and figure 6 shows cross-sectional view of combined mass component (10) removed from lower die part (A) and upper die part (B).

Welding bridges (12) placed onto counterweight plate (11) by means of bridge housing (113) provides fixing combined mass component (10) onto drive shaft by welding method. Said fixing operation is realized by means of giving electric current through welding bridge (12) and melting of stacked lower end section (123) and welding of it onto drive shaft. Welding bridges (12) are made from materials allowing welding of combined mass component (10) to the surface where it will be welded.

## Claims

1. A combined mass component (10) connected onto required sections of drive shaft in order to eliminate imbalance by providing mass balance on drive shaft and it is **characterized in** comprising;
• A counterweight plate (11) providing mass needed for combined mass component (10)
• At least a welding bridge (12) located on said counterweight plate (11) in order to provide connection of combined mass component (10) onto drive shaft by spot welding,
• At least a bridge housing (113) formed on counterweight plate (11) in order to provide location of welding bridge (12) onto counterweight plate (11).

2. A combined mass component (10) according to claim 1, **characterized in** comprising; said counterweight plate (11) is made of steel material.

3. A combined mass component (10) according to claim 1, **characterized in** comprising; said counterweight plate (11) consists of single layer.

4. Method for production of combined mass component (10) connected onto required sections of drive shaft by spot welding in order to eliminate imbalance by providing mass balance on drive shaft and it is **characterized in** comprising following steps:
• Placement of welding bridges (12) onto counterweight plate (11) by means of bridge housings (113),
• Placement of counterweight plate (11) whereon welding bridges (12) are located, between lower die part (A) and upper die part (B) compressing by die (K).
• Changing lower end sections (121) and upper end sections (122) of welding bridges (12) permanently and transformation into stacked lower end sections (123) and stacked upper end sections (124) upon collection of counterweight plate (11) upper surface (111) and lower surface (112),
• Removing the obtained combined mass component (10) from lower die part (A) and upper die part (B).
